# FASCICULE DE BREVET EUROPEEN

(11) **EP 0 992 161 B1**
(45) Date de publication et mention de la délivrance du brevet: **05.09.2001**
(21) Numéro de dépôt: 98933736.5
(22) Date de dépôt: 26.06.1998
(51) Int. Cl.: H04N 7/52, H04N 7/16

(54) **PROCEDE DE TRANSMISSION DE DONNEES EN PAQUETS ENTRE UN EMETTEUR DE TELEVISION NUMERIQUE ET DES RECEPTEURS DE TELEVISION**
VERFAHREN ZUR ÜBERTRAGUNG VON DATENPAKETEN ZWISCHEN EINEM DIGITALEN FERNSEHSENDER UND FERNSEHEMPFÄNGERN
METHOD FOR PACKET-LIKE DATA TRANSMISSION BETWEEN A DIGITAL TELEVISION TRANSMITTER AND TELEVISION RECEIVER SETS

(30) Priorité: 27.06.1997 FR 9708104
(43) Date de publication de la demande: 12.04.2000
(73) Titulaire: SAGEM SA, 75116 Paris (FR)
(72) Inventeur: SAGOT, Didier, F-95280 Jouy le Moutiers (FR)
(74) Mandataire: Bloch, Gérard
(86) Numéro de dépôt international: FR9801365
(87) Numéro de publication internationale: WO9900987

(56) Documents cités:
- EP-A- 0 714 213
- EP-A- 0 716 546
- EP-A- 0 735 776
- WO-A-97/28652
- US-A- 5 515 106
- US-A- 5 600 364
- ISO/IEC DIS13818-1 (MPEG 2 PART 1): "CODING OF AUDIO, PICTURE, MULTIMEDIA AND HYPERMEDIA INFORMATION - GENERIC CODING OF MOVING PICTURES AND ASSOCIATED AUDIO INFORMATION - PART1: Systems" ISO/IEC JTC 1/SC 29,10 juin 1994, XP002060689 INTERNATIONAL STANDARDS ORGANIZATION

## Description

Les signaux numériques de télévision numérique sont transmis sur des artères à haut débit pouvant acheminer simultanément plusieurs programmes TV. Pour faciliter la transmission et la sélection en réception des signaux des divers programmes, le flux vidéo continu d'images et de sons numérisés à transmettre est découpé, au niveau du serveur, en paquets comportant un en-tête identifiant l'un des flux élémentaires de programme. Les paquets des divers flux sont ensuite multiplexés temporellement et, après diffusion, les divers récepteurs de télévision analysent les en-têtes pour extraire les paquets des différents flux du programme désiré.

On diffuse de la même façon des données aux récepteurs, par exemple les pages de magazines de télévision, des signaux de test, des autorisations d'accès à des chaînes payantes, ou même encore des données sans rapport avec la télévision. Le récepteur sert alors de terminal informatique ou tout au moins de commutateur de réception de données.

EP-A-0 735 776 enseigne des paquets TS, comportant un identificateur PID représentant un attribut du paquet, paquets TS qui transportent un flux de paquets PES. Chaque paquet PES comporte un identificateur de flux ID décrivant son contenu. Chaque récepteur sélectionne les paquets d'après leur PID, en utilisant des descripteurs de paquet, PSI.

Lorsqu'il s'agit de données à transmettre à un récepteur déterminé, comme une autorisation d'accès à une chaîne payante, il faut ajouter, au bloc de données destiné à être transporté dans un paquet, une adresse spécifique au récepteur.

L'ensemble adresse et bloc de données est ensuite encapsulé dans un paquet comportant un en-tête spécifiant le type des données.

Par exemple, l'en-tête indique qu'il s'agit d'un ensemble formé d'un bloc de données et d'une adresse et le récepteur recherche alors l'adresse dans une zone prédéterminée de l'ensemble bloc de données et adresse. Un autre en-tête possible spécifiera par exemple une autre longueur d'adresse, une autre position d'adresse dans le paquet ou encore une absence d'adresse. Bref, l'en-tête définit une syntaxe indiquant la structure du paquet et permettant d'exploiter les données.

De façon classique, le récepteur de télévision numérique comporte un démultiplexeur frontal analysant les en-têtes reçus, qui filtre ceux-ci par comparaison à des en-têtes attendus, pour ne sélectionner que ceux intéressant le récepteur, c'est-à-dire une voie image et la voie son associée et une voie données qu'il aiguille vers les circuits d'utilisation respectifs.

Le démultiplexeur comporte des circuits comparateurs supplémentaires pour analyser, simultanément au type de données, une partie de l'adresse des blocs de données, s'ils sont du type à adressage. Cela permet d'effectuer un filtrage frontal plus poussé et évite ainsi de transmettre à l'unité centrale du récepteur, qui reçoit du multiplexeur les données adressées, tous les messages individuels adressés aux millions d'abonnés raccordés.

Cependant, la taille limitée du démultiplexeur ne lui permet pas en général d'effectuer un filtrage sur toute la profondeur de l'adresse. L'unité centrale reçoit donc encore un flux important de données correspondant à d'autres adresses et c'est cette unité qui doit effectuer un filtrage complémentaire sur la portion d'adresse non analysée par le démultiplexeur. Cela représente une lourde tâche en temps d'occupation et nécessite de surdimensionner cette unité centrale.

La présente invention vise à décharger, au moins partiellement, l'unité centrale de la tâche de filtrage d'adresse.

A cet effet, l'invention concerne un procédé de transmission de données entre un émetteur de diffusion de signaux numériques de télévision numérique et une pluralité de récepteurs de télévision, procédé dans lequel, à l'émission, on encapsule les données dans des paquets destinés, en réception, à être sélectionnés par filtrage d'une adresse associée de récepteur, les paquets comprenant, chacun, une partie en-tête et une partie utile avec, dans celle-ci, l'adresse de récepteur dont la profondeur est supérieure à la capacité de filtrage de réception de la partie utile, procédé caractérisé par le fait qu'on déporte, dans la partie en-tête des paquets, une partie seulement de l'adresse.

Ainsi, le démultiplexeur frontal de sélection a une efficacité de filtrage améliorée puisqu'il effectue au total un filtrage d'adresse d'une profondeur accrue par la partie déportée de l'adresse. Le flux subsistant de paquets aiguillés vers le circuit d'exploitation est ainsi réduit et celui-ci est donc partiellement ou totalement déchargé des tâches de filtrage d'adresse.

L'invention sera mieux comprise à l'aide de la description suivante d'un mode de mise en oeuvre préféré du procédé de l'invention, en référence aux figures du dessin annexé, sur lequel :
- la figure 1 représente schématiquement un émetteur de diffusion TV numérique pour la mise en oeuvre du procédé de l'invention,
- la figure 2 représente schématiquement un récepteur de télévision correspondant,
- la figure 3 représente une section de données et
- la figure 4, formée des figures 4a, 4b, 4c et 4d, illustre le déport de mots de code d'adresse.

Il s'agit dans cet exemple d'une diffusion de signaux numériques de télévision numérique et de données selon la norme MPEG2.

Pour le transport de ces signaux et données, les flux élémentaires continus de ceux-ci sont préalablement découpés, dans une couche logicielle transport, en blocs de signaux ou de données puis chaque bloc est encapsulé dans un paquet de transport comportant un champ identifiant le flux élémentaire. Ce champ comporte un mot de code PID (Identificateur de Paquet) pour reconstituer en réception le flux élémentaire à partir des paquets, diffusés par multiplexage entre eux, c'est-à-dire pour sélectionner par filtrage et démultiplexer les paquets.

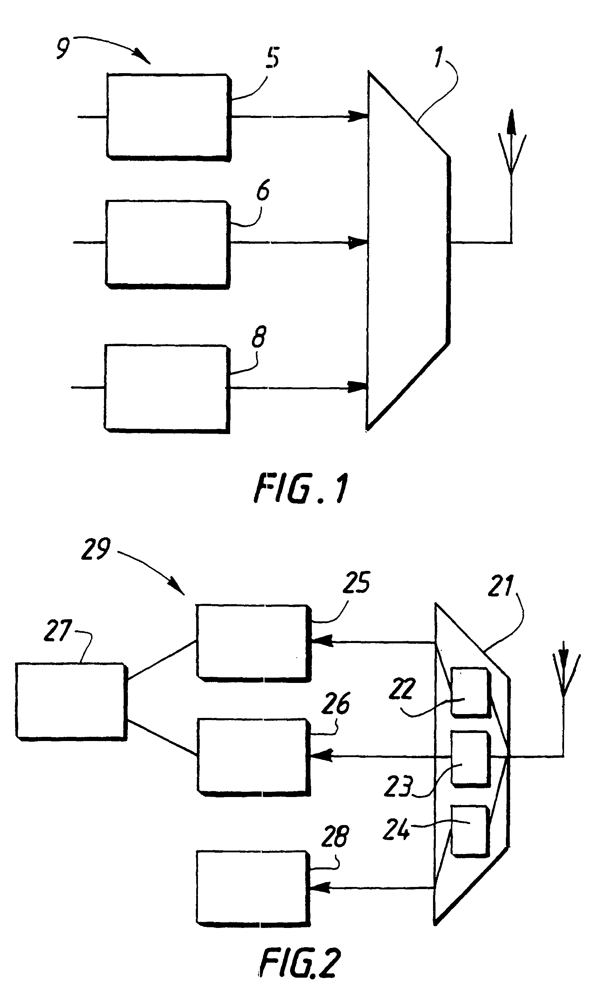

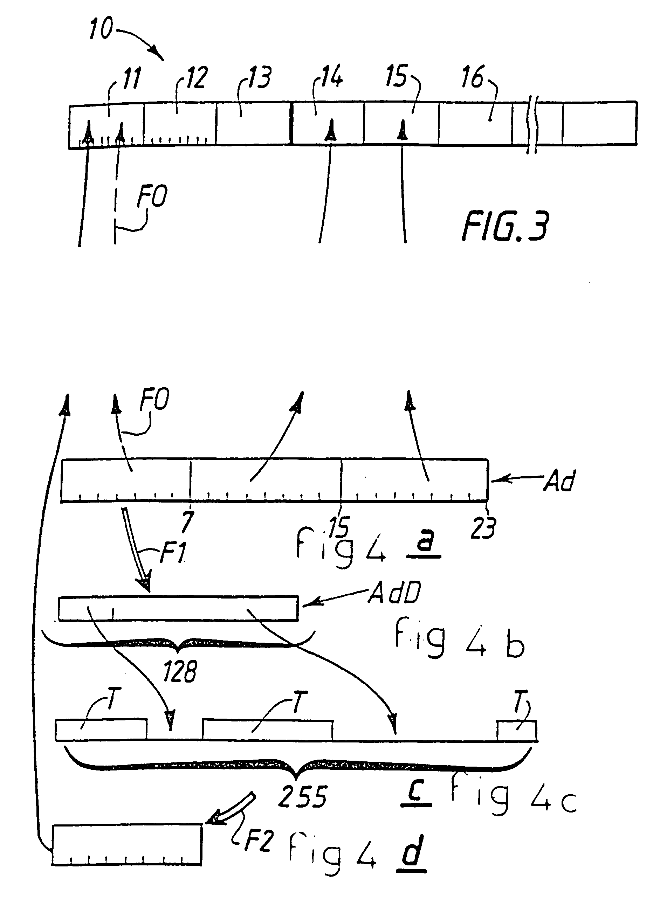

Une couche logicielle supplémentaire dite section concerne spécifiquement le transport des données. Un paquet de données 10, de taille variable, est appelé section (figure 2) et comporte un champ d'en-tête de trois (ou huit) octets 11, 12, 13, suivi d'une partie utile comportant les données elles-mêmes. Dans ce champ, un mot de code T d'une table, choisi parmi une pluralité déterminée (figure 4c), spécifie la syntaxe, ou type, du bloc de données, c'est-à-dire entre autres la position des divers types d'informations qui y sont contenues ou encore leur nature. Ce peut être par exemple la taille, et implicitement la position en tête, d'une adresse de récepteur de télévision. Ce même champ peut comporter plusieurs mots de code T appartenant à plusieurs tables ou sous-tables appelées PSI (Informations Spécifiques de Programme) et SI (Informations Système). On peut ainsi sélectionner des pages de magazine de programmes TV diffusé selon l'heure du programme, la chaîne, ou encore le sujet. En bref, ce sont les données utilisateur de la couche système de la norme MPEG2 qui sont encapsulées dans des sections.

Dans l'en-tête court 11, 12, 13, de cet exemple, le premier octet 11 porte le(s) mot(s) de code T ci-dessus, qui peuvent prendre une valeur parmi 127. Les deux octets suivants 12, 13 spécifient la longueur du paquet 10. Les données avec adresse sont disposées à partir du quatrième octet 14, l'adresse Ad étant en pratique au début. Cette adresse est de longueur variable. On comprendra donc que par en-tête on désigne un champ de position déterminée dans le paquet 10, et pas uniquement une position en tête du paquet 10.

L'émetteur 9 de diffusion des paquets de signaux TV et des paquets de données 10 comporte un multiplexeur 1 d'émission, ici radio, comportant trois affluents : une voie de paquets de signaux d'image TV, provenant d'un codeur 5, une voie associée de paquets de signaux audio provenant d'un codeur 6 et une voie de données provenant d'une unité 8.

Le récepteur de télévision 29 appartient à une pluralité de tels récepteurs et présente une structure symétrique de celle de l'émetteur 9, avec un démultiplexeur frontal 21 recevant tous les paquets 10 et effectuant un tri pour exiraire et aiguiller, d'une part, deux flux de paquets, image et son respectivement, vers des circuits de décompression et de restitution vidéo et audio 25, 26 et 27 et, d'autre part, un ou plusieurs flux de données vers une unité centrale 28, commandant les circuits 21, 25, 26 par des liaisons non représentées, unité centrale 28 qui a configuré à cet effet des circuits comparateurs 22, 23, 24 du démultiplexeur 21, c'est-à-dire qui a spécifié des mots de code à reconnaître.

Dans cet exemple, le démultiplexeur 21 a une capacité de filtrage de sections de cinq octets, c'est-à-dire les trois octets d'en-tête 11, 12, 13 et les octets 14, 15 de rang quatre et cinq de début des données avec adresse. L'adresse Ad est supposée comporter 23 bits pour adresser individuellement 8 millions de récepteurs de télévision. 16 de ces 23 bits d'adresse occupent les octets 14, 15 de rang quatre et cinq. Le démultiplexeur 21 a une capacité de filtrage de réception de la partie utile (les deux octets 14, 15) inférieure à la profondeur de l'adresse, ici 23 bits.

Les sept autres bits d'adresse, donc une partie seulement de l'adresse, sont, selon l'invention, déportés dans le premier octet 11 de champ de type de paquet, au lieu d'être placés dans l'octet 16 de rang six. Le poids de bits d'adresse déportés n'a pas d'importance, il suffit qu'il soit déterminé. C'est donc ici une partie de l'adresse de chaque section qui est déportée de sa charge ou partie utile dans son en-tête.

Dans le cas où les mots de code laissés disponibles par les mots de code T, de type de données, prévus dans le premier octet 11 ne coïncident pas avec les mots de code d'adresse Ad que l'on veut déporter, on détermine une table de transcodage des 127 mots de code T de type de données et des 128 mots de code d'adresse, fournissant 255 mots de code correspondants et différents. En pratique, pour conserver une compatibilité ascendante avec les récepteurs de télévision déjà installés, le transcodage ne porte que sur les 7 bits d'adresse déportés, à l'exclusion des mots de code T. On peut ainsi, si besoin est, transcoder une suite continue de 128 mots de code d'adresse en une suite discontinue de mots de code.

La figure 4 illustre un tel transcodage de 127 mots de code d'adresse en autant de mots de code laissés libres par les mots T de code de type. Plus précisément, la figure 4a représente un mot de code d'adresse Ad à 23 bits. La figure 4b représente les 128 combinaisons possibles, ou mots de code d'adresse partielle AdD, donc après décodage des 7 bits de gauche de la figure 4a selon la flèche F1. La figure 4c représente 255 combinaisons possibles offertes par un octet (ici l'octet 11), dont 127 sont réservées aux mots de code T de type. Il reste ici deux plages disponibles, qui deviennent réservées aux 128 combinaisons des adresses décodées AdD. La figure 4d illustre le recodage sous forme d'un octet (flèche F2) des 255 combinaisons ci-dessus et le déport de celui-ci dans l'octet 11.

On conçoit que les figures 4b et 4c, montrant des états décodés, n'ont qu'un but didactique et que le transcodage des adresses codées Ad en le mot de code final composite (T, Ad) de la figure 4d est direct, au moyen d'une table. La flèche F0 illustre le cas où il y aurait transfert direct des 7 bits considérés de l'adresse Ad dans l'octet 11, sans transcodage. Les mots de code T et ceux d'adresse seraient alors codés sur 7 bits, le 8ème bit spécifiant qu'il s'agit ou non de bits d'adresse Ad ou de bits T, c'est-à-dire réservant 128 combinaisons à la partie déportée de l'adresse.

On notera que les mots de code d'adresse déportée contiennent une information de type des données, puisque leur détection indique qu'il s'agit de données avec adresse. De ce fait, c'est la détection d'un mot de code d'adresse déporté qui active, ou valide, la comparaison portant sur les octets d'adresse de rangs quatre et cinq (14, 15).

Dans cet exemple, un mot de code parmi 255 est donc défini par 8 bits, c'est-à-dire qu'il occupe tout le premier octet 11. Il s'agit donc, dans cet octet 11, d'une réservation définie uniquement par le mot de code, non par sa position. Il pourrait cependant être prévu de segmenter en deux l'octet 11 pour réserver des positions de bit déterminées à un mot de code T, de type, et à un mot de code d'adresse, respectivement.

Dans cet exemple, le démultiplexeur frontal 21 effectue ainsi un filtrage 128 fois plus efficace que dans le cas d'une absence de filtrage d'adresse sur le premier octet 11. De ce fait, le filtrage frontal est ici total et l'unité centrale 28 ne reçoit que les messages de l'adresse retenue, puisqu'elle n'a aucun filtrage complémentaire à effectuer. Dans d'autres exemples numériques, l'unité centrale pourrait devoir effectuer un tel filtrage complémentaire, mais dans une proportion réduite de par les bits d'adresse déportés dans le premier octet et analysés par le démultiplexeur frontal.

D'une façon générale, les mots de code d'adresse du champ formé par le premier octet 11 peuvent aussi comporter des informations autres, permettant par exemple l'exploitation des données adressées au téléviseur, ou à un groupe de téléviseurs.

## Revendications

1. Procédé de transmission de données entre un émetteur (9) de diffusion de signaux numériques de télévision numérique et une pluralité de récepteurs de télévision (29), procédé dans lequel, à l'émission, on encapsule les données dans des paquets (10) destinés, en réception, à être sélectionnés (21) par filtrage d'une adresse associée de récepteur, les paquets (10) comprenant, chacun, une partie en-tête (11) et une partie utile avec, dans celle-ci, l'adresse de récepteur dont la profondeur est supérieure à la capacité de filtrage de réception de la partie utile, procédé caractérisé par le fait qu'on déporte, dans la partie en-tête (11) des paquets, une partie seulement de l'adresse.

2. Procédé de transmission selon la revendication 1, dans lequel ce sont des données utilisateurs de la couche système de la norme MPEG2 qui sont encapsulées et c'est une partie de l'adresse de chaque paquet (10) qui est déportée de sa charge utile dans son en-tête.

3. Procédé de transmission selon l'une des revendications 1 et 2, dans lequel on transcode la partie d'adresse à déporter en un mot de code disponible.

4. Procédé de transmission selon l'une des revendications 1 à 3, dans lequel, en réception, on n'effectue une reconnaissance de la partie d'adresse non déportée qu'après reconnaissance de la partie d'adresse déportée.

5. Procédé de transmission selon l'une des revendications 1 à 4, dans lequel on alloue au début de la partie d'adresse non déportée une position prédéterminée dans le paquet (10).

## Patentansprüche

1. Verfahren zur Übertragung von Daten zwischen einem Sender (9) zur Ausstrahlung von Digitalsignalen des digitalen Fernsehens und einer Vielzahl von Fernsehempfängern (29), wobei die Daten beim Senden in Paketen (10) verpackt werden, die dazu bestimmt sind, beim Empfang vom Empfänger durch Filtern einer zugeordneten Adresse ausgewählt zu werden (21), wobei die Pakete (10) jeweils einen Kopfbereich (11) und einen Nutzbereich mit der Empfängeradresse darin aufweisen, dessen Untersuchungstiefe höher als die Empfangs-Filterkapazität Nutzbereichs ist, wobei das Verfahren **dadurch gekennzeichnet** ist, dass in den Kopfbereich (11) der Pakete nur ein Teil der Adresse verlagert wird.

2. Übertragungsverfahren nach Anspruch 1, wobei die daten die Verpackt werden Benutzerdaten der Systemschicht der MPEG2-Norm sind und das ist ein Teil der Adresse eines jeden Pakets (10) der von seinem Nutzbereich in seinen Kopfbereich verlagert wird.

3. Übertragungsverfahren nach einem der Ansprüche 1 oder 2, wobei der zu verlagernde Teil der Adresse in ein verfügbares Codewort umcodiert wird.

4. Übertragungsverfahren nach einem der Ansprüche 1 bis 3, wobei beim Empfang eine Erkennung des nichtverlagerten Teils der Adresse erst nach einer Erkennung des verlagerten Teils der Adresse erfolgt.

5. Übertragungsverfahren nach einem der Ansprüche 1 bis 4, wobei dem Anfang des nichtverlagerten Teils der Adresse eine vorbestimmte Position in dem Paket (10) zugewiesen wird.

## Claims

1. Process of transmitting data between-a transmitter (9) for broadcasting digital signals for digital television and a plurality of television receivers (29), a process in which, during transmission, the data are encapsulated into packets (10) intended, upon reception, to be selected (21) by filtering of an associated receiver address, the packets (10) each comprising a header part (11) and a useful part containing the receiver address, of which the depth is greater than the reception filtering capability of the useful part, the process being **characterised in that** only a part of the address is shifted into the header part (11) of the packets.

2. Transmission process according to claim 1, wherein the data that are encapsulated are user data of the system layer of the MPEG2 standard, and it is a part of the address of each packet (10) which is shifted from its useful load into its header.

3. Transmission process according to one of claims 1 and 2, wherein the address part to be shifted is transcoded into an available code word.

4. Transmission process according to one of claims 1 to 3, wherein, during reception, the non-shifted address part is recognised only after recognition of the shifted address part.

5. Transmission process according to one of claims 1 to 4, wherein the beginning of the non-shifted address part is allocated a predetermined position in the packet (10).
